# EUROPEAN PATENT SPECIFICATION

(11) **EP 3 398 843 B1**
(45) Date of publication and mention of the grant of the patent: **21.12.2022**
(21) Application number: 18170324.0
(22) Date of filing: 02.05.2018
(51) Int. Cl.: B62H 5/20, B62K 19/40, B62K 19/32, B62M 6/90, B62M 6/45, B62J 7/04, B62J 43/13, B62J 45/00

(54) **BICYCLE COMPRISING AN ANTENNA SYSTEM**
FAHRRAD ENTHALTEND EINE ANTENNENVORRICHTUNG
BICYCLETTE COMPRENANT UN DISPOSITIF D'ANTENNE

(30) Priority: 02.05.2017 NL 2018824
(43) Date of publication of application: 07.11.2018
(73) Proprietor: Tracefy B.V., 2288 EH Rijswijk (NL)
(72) Inventor: VAN KESTER, Johannes, RIJSWIJK (NL); PENNING, Niels Sebastiaan, RIJSWIJK (NL)
(74) Representative: Algemeen Octrooi- en Merkenbureau B.V.

(56) References cited:
- WO-A1-2016/034957
- WO-A1-2017/188824
- CN-U- 203 528 652
- CN-U- 204 236 718
- DE-A1-102011 107 880
- DE-A1-102015 208 722
- DE-U1-202015 105 603
- US-A1- 2012 146 429

## Description

### Technical field of the invention

The present invention relates to a bicycle.

### Prior Art

Bicycles are obviously widely known. Obviously, this also applies to similar two-wheel vehicles, such as motorcycles, mopeds, et cetera.

One problem of such bicycles is that they are prone to theft. Bicycles are therefore equipped with various types of locking mechanisms, such as chains, locks, et cetera, in order to prevent theft. However, these measures offer only limited relief. Due to their relatively light weight, bicycles can be easily lifted. The locking mechanisms are then removed at a different location. Furthermore, the likelihood that the respective bicycle thief is "caught" is relatively low.

WO2016/034957 discloses a frame or a handle for a bicycle comprising a tubular element defining an external surface, and an interior compartment, positioned in which is a location system equipped with a battery and an antenna. The location system covered by way of an opaque covering layer, so that it is hidden from view.

WO2016/067263 discloses a rechargeable battery for an electric bicycle, comprising a radio-communication interface which can receive and transmit information about the location of the battery via a GSM/GPRS network, for instance when it is disconnected.

CN206107410 discloses a bicycle with an anti-theft tracker. The frame of the bicycle comprises a micro-controller, a lithium battery and a GPS transmitter. The micro-controller is connected with an antenna in the handlebar of the bicycle by way of a wire located inside the frame.

DE202015105603 discloses a bicycle comprising an accumulator unit with a location unit inside it.

CN204236718 discloses an antenna module inserted into a front fork of a bicycle, via an opening in the top end of the front fork.

CN203528652 discloses an antenna system comprised by a head tube of a bicycle.

US2012/0146429 discloses a battery pack for an electric bicycle and a method for controlling the battery pack.

DE102011107880A1 discloses a GPS tracking module arranged in the saddle pen or seat shaft of a bicycle.

DE102015208722 A1 and WO2017/188824 A1, constituting a prior right under Article 54(3) EPC, each disclose a bicycle having a bicycle frame, wherein an antenna system is arranged in or in front of a frame opening in a tube head of the frame to form a tracking system.

DE202015105603 U1 discloses a bicycle according to the preamble of independent claim 1 as well as an electric bicycle according to the preamble of independent claim 7, and constitutes the closest prior art to the subject-matter of independent method claim 6.

### Goal of the invention

A goal of the invention is to provide a bicycle which, if stolen, is easy to trace.

A further goal of the invention is to provide a bicycle which, if stolen, increases the likelihood that the respective bicycle thief will be arrested.

Yet another goal of the invention is tracing bicycles that are part of a fleet of bicycles, such as bicycles used by pizza deliverers, couriers, et cetera, and to collect data with respect to the use of such bicycles.

### Description of the invention

Thus, a bicycle according to claim 1, a method according to claim 6 and an electric bicycle according to claim 7 are disclosed.

Because the bicycle according to the invention features an antenna system equipped for receiving or transmitting radio signals in order to determine the position of the bicycle, the bicycle is easy to trace in the event that the bicycle is stolen. Since the antenna system may also be adapted for receiving or transmitting data from or to the bicycle, such as data relating to the use of the bicycle, collection of data about a fleet of bicycles becomes possible.

Since it is also possible to locate the bicycle in case of theft by way of the antenna system, it is possible, for instance, to follow the bicycle to the location in which the thief intends to park, store or sell the bicycle, et cetera. At this location, the thief can then be apprehended.

For these purposes, it is important that the frame component or the sheathing in which the antenna system is arranged be relatively inaccessible for a malevolent person such as a thief, such that a disabling of the antenna system is prevented.

Obviously, the invention can also be used with similar two-wheel vehicles such as motorcycles, mopeds, et cetera, which too are subject to an increased risk of theft.

The frame of a bicycle is typically made out of metal. In many cases, this metal forms what is known as a Faraday cage, which makes it impossible to send radio signals through the frame. The inventor has understood that the antenna system can be arranged on a non-conductive part of the frame or in a non-conductive sheathing, such that on the one hand, the sturdiness of the frame or of the sheathing is advantageously used to protect the antenna system, and on the other hand, the signal of the antenna system is obstructed to a relatively lesser degree. By positioning the antenna system on an outer surface of the frame, the signal is further optimized. The term "outer surface" is meant in a broad sense and refers to the area close to the outer perimeter of the frame.

According to one aspect of the invention, there is provided a bicycle according to claim 1. This positioning of the antenna system further optimizes reception Furthermore, this positioning of the antenna system can be described as very inconspicuous.

When positioning the antenna system behind the frame opening, the frame opening preferably has a diameter equal to or slightly greater than the diameter/circumference of the "emission cone" of the antenna system at the location where the emission cone intersects the contours of the head tube, such as 0-20%, for instance 0-10% larger. It goes without saying that the frame opening can also be used to define/delineate this emission cone.

According to another aspect of the invention, there is provided an electric bicycle according to claim 7. In practice, it transpires that placement in the battery dock offers a good reception of the radio signals as well. Furthermore, there is the advantage that the power source for the antenna system, the battery, is located near the antenna system.

In the framework of this patent application, the term "battery dock" means: a device by which or to which a battery can be connected, such that when it is connected, it can provide one or multiple components of the bicycle with power.

Preferably, the antenna system comprising a GPS, GSM, Wi-Fi, or Bluetooth module. The antenna system may furthermore comprise an NB-loT, LoRa or CAT-M module. In practice, these communication standards appear to be well-suited for locating a bicycle. Obviously, it is also possible to combine multiple of these communication standards in order to optimize the location of the bicycle.

Preferably, the antenna system is designed to transmit data via 4G LTE, 2G GSM/GPRS, 3G, Bluetooth, RFID, NFC, or Wi-Fi. In practice, these standards have proven to be advantageous for remotely reading data about the condition of the bicycle.

Preferably, the bicycle comprises a data collection device collecting location data, speed data, or acceleration data. Such a data collection device can be very useful when locating the bicycle, for instance when temporarily no signal is available. Furthermore, this data can be useful for reconstructing the route taken by the thief towards the parking, storage, or sale location. Obviously, this data can also be used for other purposes.

Preferably, the data collection device is communicatively linked with the antenna system. This allows for an advantageous exchange of information between the antenna system and the data collection device.

Preferably, the data collection device and/or the antenna system are communicatively linked with a control panel, a bicycle lock, or a display. The communicative link with a control panel or a display allows the showing of relevant data to the user of the bicycle. This obviously also applies to data that are not or almost not related to theft.

According to claim 4, the bicycle comprises processing unit that is communicatively linked the antenna system, and is arranged in a seat post, a horizontal tube, or an inclined tube of the frame, preferably in a lower half of the seat post of the frame. Thus, the processing unit is well-protected against ambient impact. Furthermore, this location is relatively central inside the frame, which facilitates the communications with the antenna system.

According to claim 5, the processing unit comprises a back-up battery. This back-up battery can absorb possible interruptions of the power supply, for instance interruptions when the power supply is a (hub) dynamo, allowing continued operation of the processing unit and of the antenna system and/or data collection device connected with it.

Preferably, the battery dock is made out of plastic. Preferably, this plastic is a hard plastic that is not prone to cracking. Plastics are naturally non-conductive, such that they do not interfere with the radio signals.

According to claim 10, the battery dock comprises a back-up battery, also for the purpose of absorbing possible interruptions in the power supply.

According to claim 11, the electric bicycle comprises an anti-theft system adapted to disable the electric drive comprised in the electric bicycle when the antenna system, the data collection device, the processing unit, and/or the back-up battery are removed from the bicycle. This prevents the use of the electric drive for moving the bicycle if a thief (partially) disables the tracking system by removing the aforementioned components.

Preferably, the electric bicycle comprises a CAN bus system to allow the regulation system of the electric bicycle to communicate with the processing unit, the antenna system being communicatively linked with a server. An advantage of this embodiment is that information can be externally analyzed via the regulation system. Furthermore, it is possible to allow the software to update the regulation system externally.

According to claim 12, the processing unit is adapted to deactivate the regulation system of the electric bicycle by way of a signal from the antenna system. This makes it possible to remotely deactivate the bicycle.

According to another aspect of the invention, there is provided in claim 6 a method for manufacturing a bicycle according to claim 4.

By way of this method, the antenna system and the processing unit can be easily built into the bicycle in the course of the manufacturing process or mounted in or on the bicycle retroactively.

Preferably, the communicative and/or electrical links are created through the routing of wires in one or several tubes of the frame, such as the horizontal or inclined tube, as a result of which a simple deactivation of the communicative and/or electrical links can be prevented.

### Short description of the figures

The invention will be further described below by way of the exemplary embodiments shown in the drawings. The drawings show as follows:
- Figure 1: shows a side view of an exemplary embodiment of a bicycle according to the invention, in which the antenna system is arranged inside the frame near a tube head of the frame, and is covered by a badge;
- Figure 2: shows a side view of an exemplary embodiment of a bicycle according to the invention, in which the bicycle is an electric bicycle, and the antenna system is arranged in a battery dock on a rear carrier of the electric bicycle; and
- Figure 3: shows a detail of the tube head badge and of the antenna system according to the exemplary embodiment of Figure 1.

### Elaborate description of the figures

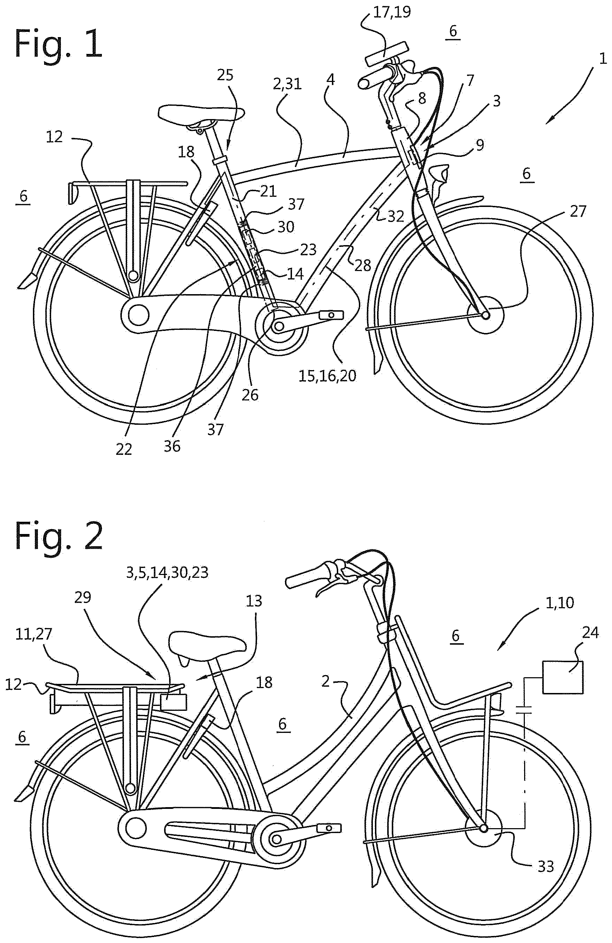

Figures 1-3 will be discussed jointly. Figure 1 shows a bicycle 1 without an electrical auxiliary motor, with a frame 2 as is common in men's bicycles. In this exemplary embodiment, an antenna system 3 is arranged in a non-conductive frame component 4 on an outer surface 6 of the frame 2 according to the invention, specifically behind a frame opening 7, at the tube head 8 of the frame 2. When in use, the frame opening 7 and the antenna system 3 are covered by a non-conductive cover 9, for instance a badge, specifying the name of the manufacturer or something similar. As stated, the antenna system 3 can also be arranged ahead of the frame opening 7 (not according to the invention), in which case the frame opening 7 serves only as a cable feedthrough, or alternatively, the frame opening 7 can be left out entirely (not according to the invention). The badge 9 preferably follows the contours of the frame, and preferably has a curved form. The maximum thickness of the badge 9 is approx. 1 mm, and it weakens the transmission/receipt of the signal by no more than 10-20%.
The antenna system 3 is adapted for receiving or transmitting radio signals in order to determine the position of the bicycle 1 and/or for transmitting data to and from the bicycle 1. As previously stated, in order to determine the position of the bicycle 1, the antenna system 3 may also comprise a GPS, GSM, Wi-Fi, or Bluetooth module for short distances - i.e. 0-50 m - as well as longer distances - i.e. more than 50 m - communications. Obviously, it is also possible for the antenna system 3 to communicate by way of one of the aforementioned (short distance) means of communication with other parts of the tracking system (as will be further explained below). Preferably, the antenna system 3 is further adapted for data transmission via 4G LTE, 2G GSM/GPRS, 3G, Bluetooth, RFID, NFC, or Wi-Fi.

Preferably, the bicycle 1 features a (very schematically shown) data collection device 14 for the collection of location data, speed data, or acceleration data. This data may be stored, for instance, in a memory located on the bicycle 1, or transmitted for remote storage via one of the aforementioned means of communication. For these purposes, the data collection device 14 may be communicatively linked 15 with the antenna system 3. A CAN bus system may be provided to allow for communications between the regulation system of an electric bicycle with the processing unit 30. By way of example, the data collection device 14 and/or the antenna system 3 are communicatively linked 16 with a control panel 17, a bicycle lock 18, or a display 19. This also applies to the processing unit 30, which is communicatively linked 20 with the antenna system 3 and/or data the collection device 14 as well. Preferably, this processing unit 30 is arranged in a seat post 21 of the frame 2, preferably in a lower half 22 of the seat post 21 of the frame 2. The processing unit 30 is positioned at a distance from the antenna system 3. The processing unit 30 in the seat post 21 is communicatively connected with the antenna system 3 at the tube head 8 by way of a wire 20. It is also possible, however, for the processing unit 30 to be arranged at or under the seat. Preferably, this processing unit 30 comprises a back-up battery 23 in addition to, for instance, a PCB with a chipset. The processing unit 30 can advantageously monitor the condition of the bicycle lock 18, for instance, independently or in cooperation with the data collection device 14, so that irregularities (theft) can be quickly detected and reported, for instance to the lawful owner of the bicycle 1. Preferably, the processing unit 30 - whether it features a back-up battery 23 or not - and the data collection device 14 are housed in a single module/enclosure 36 to facilitate installation and production. Obviously, the antenna system 3 itself can be housed in this module 36 as well (not according to the invention), provided that transmission and reception of radio and/or data signals can remain relatively unobstructed. The processing unit 30 or the aforementioned module 36 may be arranged in the seat post 21 or in one of the tubes of the frame 31, 32, for instance, between two fixation caps 37. When the processing unit 30 or the aforementioned module 36 is arranged in a horizontal tube 31 or in an inclined tube 32 of the frame, this is preferably done such that the processing unit 30 or the aforementioned module 36 is in the vicinity of the antenna system 3 in the tube head, for instance at a maximum distance of 1/3 of the length of the relevant tube 31, 32, or at a distance of no more than 20-30 cm from the antenna system 3.

Preferably, the bicycle 1 is manufactured according to the exemplary embodiment of Figure 1 by way of a method comprising the following steps:
- inserting the processing unit 30 into the seat post 21 of the frame 2 via an opening 25 at an upper side of the seat post 21, for instance, via a seat shaft opening, or via an opening 26 on a lower side of the seat post 21, for instance via a hole at the crank axle,
- fixing the processing unit 30 in the seat post 21, preferably in the lower half 22 of the seat post 21, for instance by means of the fixation caps 37,
- arranging the antenna system 3 in the frame 2 behind the frame opening 7, at the tube head 8 of the frame 2,
- creating a communicative link 15, 16, 20 between the processing unit 30 and the antenna system 3,
- creating an electrical connection 28 between the processing unit 30 and the antenna system 3 and a power source 27, such as a battery, a hub dynamo, or an electric motor,
- covering the frame opening 7 with the non-conductive cover 9, such as the badge. As stated. the antenna system 3 may also be arranged before the frame opening 7 (not according to the invention), in which case the frame opening 7 serves only as a cable feedthrough.

As stated, the communicative and/or electrical links are preferably created through the routing of wires 28 through one or several tubes of the frame, such as through a horizontal tube 31 and/or an inclined tube 32 of the frame. Furthermore, the aforementioned method preferably uses what is known as a 'bare frame'. After performing the steps of the method, preferably the crank, the front fork, and the seat shaft are installed in the frame 2, after which the assembly of the bicycle 1 is completed.

Figure 2 shows a side view of an exemplary embodiment of a bicycle 1 according to the invention, in which the bicycle 1 is an electric bicycle 10, and the antenna system 3 is arranged in a battery dock 11 on a rear carrier 12 of the electric bicycle 10. According to the invention, in order to optimize the reception of signals, the antenna system 3 to is arranged on what is the front side 13 of the battery dock 11 when in use. At the location of the antenna system 3, the battery dock 11 has a non-conductive sheathing 5, preferably one that is made out of plastic. The battery dock 11 also comprises (again) a processing unit 30 that is communicatively linked (internally) with the antenna system 3 and is arranged in the battery dock 11 on what is the front side of the battery dock 11 when in use. The battery dock 11 further comprises (again) a back-up battery 23. According to the invention, a separate battery dock module 29 is arranged on the front side of the battery dock 11, for housing the antenna system 3 and the processing unit 30.

Preferably, the bicycle 1 also features an anti-theft system 24. This anti-theft system 24 is preferably adapted to deactivate an electric drive 33 featured by the electric bicycle 10, which may be arranged at the crank axle, at the rear wheel axle, or at the front wheel axle if the antenna system 3, the data collection device 14, the processing unit 30, and/or the back-up battery 23 should be removed from the bicycle 1, or if an unwanted or otherwise improper condition of the bicycle lock 18 is detected.

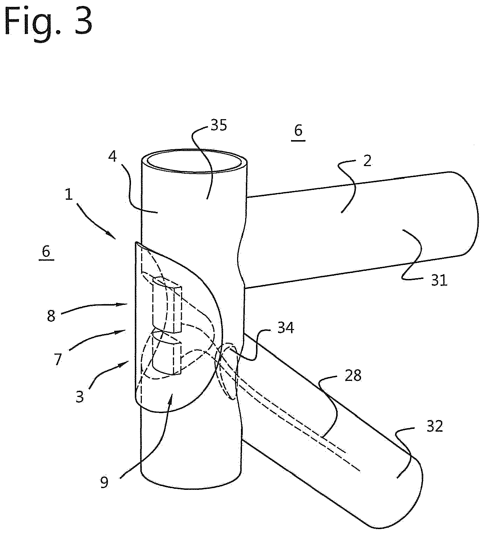

Finally, Figure 3 shows a detail of the tube head badge 9 and of the antenna system 3 according to the exemplary embodiment of Figure 1. Figure 3 shows a head tube 35 with a frame opening 7 at the front side of it, which is covered by a cover 9 in the form of a badge. The antenna system 3 is placed immediately behind the badge in order to allow for the most optimal possible reception of signals. As stated, the antenna system 3 is communicatively linked with the processing unit 30 by way of one or several wires 28 that are routed through a feedthrough opening 34 and (subsequently) through the inclined tube 32 of the frame.

Preferably, the bicycle comprises a (hub) dynamo for providing the battery and/or one or several components of the bicycle with power.

Let it be clarified that the description above is meant to illustrate the operation of preferential embodiments of the invention, and not to limit the scope of the invention. Departing from the aforementioned explanations, many variations will be evident to the person skilled in the art within the scope of the present invention defined by the appended claims.

### List with reference numbers

- 1.: Bicycle
- 2.: Frame
- 3.: Antenna system
- 4.: Frame component
- 5.: Non-conductive sheathing
- 6.: Outer surface of the frame
- 7.: Frame opening
- 8.: Tube head
- 9.: Non-conductive cover
- 10.: Electric bicycle
- 11.: Battery dock
- 12.: Rear carrier of the bicycle
- 13.: Front side of the battery dock
- 14.: Data collection device
- 15.: Communicative link between the data collection device and the antenna system
- 16.: Communicative link between the data collection device and/or the antenna system and the control panel or display or the bicycle lock
- 17.: Control panel
- 18.: Bicycle lock
- 19.: Display
- 20.: Communicative link between the processing unit and the antenna system and/or the data collection device
- 21.: Seat post of the frame
- 22.: Lower half of the seat post
- 23.: Back-up battery of the processing unit
- 24.: Anti-theft system
- 25.: Opening at the upper side of the seat post
- 26.: Opening at the lower side of the seat post
- 27.: Power source
- 28.: Wires inside the tube of the frame
- 29.: Battery dock module
- 30.: Processing unit
- 31.: Horizontal tube
- 32.: Inclined tube
- 33.: Electric drive
- 34.: Feedthrough opening
- 35.: Head tube
- 36.: Module
- 37.: Fixation cap

## Claims

1. Bicycle (1), comprising:
- a frame (2),
- an antenna system (3) adapted for receiving or transmitting radio signals in order to determine the position of the bicycle and/or receiving or transmitting data from or to the bicycle, such as data relating to the use of the bicycle, **characterized in that**:
the antenna system (3) is arranged in a head tube (35) of the frame, behind a frame through-opening (7) at a tube head (8) of the frame at a front side of the head tube, in which the frame through-opening and the antenna system, when in use, are covered by a non-conductive cover (9), such as a badge.

2. Bicycle according to claim 1, in which the antenna system comprises a GPS, GSM, Wi-Fi, or Bluetooth module.

3. Bicycle according to one of the previous claims, in which the antenna system is adapted to transmit data via 4G LTE, 2G GSM/GPRS, 3G, Bluetooth, RFID, NFC, Wi-Fi, NB-loT, LoRa, or CAT-M.

4. Bicycle according to one of the previous claims, comprising a processing unit (30) that is communicatively linked (20) with the antenna system and is arranged in a seat post (21), a horizontal tube (31), or an inclined tube (32) of the frame.

5. Bicycle according to claim 4, in which the processing unit comprises a back-up-battery (23).

6. Method for manufacturing a bicycle (1) according to claim 4, comprising the following steps:
- inserting the processing unit (30) into the seat post (21) of the frame via an opening (25) at an upper side of the seat post or via an opening (26) on a lower side of the seat post, or in the horizontal tube (31) or in the inclined tube (32),
- fixing the processing unit inside the seat post, preferably in the lower half of the seat post, or in the horizontal tube (31) or in the inclined tube (32),
- positioning the antenna system in the head tube (35) of the frame behind the frame through-opening (7) at the tube head (8) of the frame at the front side of the head tube,
- creating a communicative link between the processing unit and the antenna system,
- creating an electrical connection between the processing unit and the antenna system and a power source (27), such as a battery, a hub dynamo, or an electric motor,
- covering the antenna system with the non-conductive cover, for instance the badge.

7. Electric bicycle (1), comprising:
- a frame (2),
- an antenna system (3) adapted for receiving or transmitting radio signals in order to determine the position of the bicycle and/or receiving or transmitting data from or to the bicycle, such as data relating to the use of the bicycle, wherein the antenna system (3) is arranged in a non-conductive sheathing (5) comprised by a battery dock (11) of the electric bicycle, wherein the battery dock has the non-conductive sheathing at the location of the antenna system, **characterized in that**:
the antenna system is arranged in the non-conductive sheathing (5) on an outer surface (6) of the frame and the battery dock (11) is arranged on a rear carrier (12) of the electric bicycle, and **in that**:
the antenna system is arranged on a front side (13) of the battery dock when in use, in a separate battery dock module (29) arranged on the front side of the battery dock (11), housing the antenna system (3) and a processing unit (30) communicatively linked with the antenna system (3).

8. Electric bicycle according to claim 7, in which the antenna system comprises a GPS, GSM, Wi-Fi, or Bluetooth module.

9. Electric bicycle according to claim 7 or 8, in which the antenna system is adapted to transmit data via 4G LTE, 2G GSM/GPRS, 3G, Bluetooth, RFID, NFC, Wi-Fi, NB-loT, LoRa, or CAT-M.

10. Electric bicycle according to claim 7, wherein the battery dock (11) comprises a back-up battery (23).

11. Electric bicycle according to claim 10, comprising an anti-theft system (24) adapted to disable an electric drive comprised in the electric bicycle when the antenna system, a data collection device (14), the processing unit and/or the back-up battery are removed from the electric bicycle.

12. Electric bicycle according to any one of the claims 7 - 11, in which the processing unit is adapted to deactivate a regulation system of the electric bicycle by way of a signal from the antenna system.

## Patentansprüche

1. Fahrrad (1), das Folgendes umfasst:
- einen Rahmen (2),
- ein Antennensystem (3), das zum Empfangen oder Senden von Funksignalen, um die Position des Fahrrades zu bestimmen, und/oder Empfangen oder Senden von Daten von oder zu dem Fahrrad, etwa Daten bezüglich der Verwendung des Fahrrades, ausgelegt ist, **dadurch gekennzeichnet, dass**:
das Antennensystem (3) in einem Steuerrohr (35) des Rahmens hinter einer Rahmendurchgangsöffnung (7) an einem Rohrkopf (8) des Rahmens an einer Vorderseite des Steuerrohrs angeordnet ist, wobei die Rahmendurchgangsöffnung und das Antennensystem, wenn es in Gebrauch ist, durch eine nicht leitfähige Abdeckung (9) wie etwa eine Plakette bedeckt sind.

2. Fahrrad nach Anspruch 1, wobei das Antennensystem ein GPS-, GSM-, Wi-Fi- oder Bluetooth-Modul umfasst.

3. Fahrrad nach einem der vorhergehenden Ansprüche, wobei das Antennensystem dazu ausgelegt ist, Daten über 4G-LTE, 2G-GSM/GPRS, 3G, Bluetooth, RFID, NFC, Wi-Fi, NB-loT, LoRa oder CAT-M zu senden.

4. Fahrrad nach einem der vorhergehenden Ansprüche mit einer Verarbeitungseinheit (30), die mit dem Antennensystem kommunikationstechnisch verbunden (20) ist und in einer Sattelstütze (21), einem horizontalen Rohr (31) oder einem geneigten Rohr (32) des Rahmens angeordnet ist.

5. Fahrrad nach Anspruch 4, wobei die Verarbeitungseinheit eine Sicherungsbatterie (23) umfasst.

6. Verfahren zur Herstellung eines Fahrrades (1) nach Anspruch 4, das die folgenden Schritte umfasst:
- Einsetzen der Verarbeitungseinheit (30) in die Sattelstütze (21) des Rahmens durch eine Öffnung (25) an einer Oberseite der Sattelstütze oder durch eine Öffnung (26) an einer Unterseite der Sattelstütze oder im horizontalen Rohr (31) oder im geneigten Rohr (32),
- Befestigen der Verarbeitungseinheit innerhalb der Sattelstütze, vorzugsweise in der unteren Hälfte der Sattelstütze, oder im horizontalen Rohr (31) oder im geneigten Rohr (32),
- Positionieren des Antennensystems im Steuerrohr (35) des Rahmens hinter der Rahmendurchgangsöffnung (7) am Rohrkopf (8) des Rahmens an der Vorderseite des Steuerrohrs,
- Erzeugen einer Kommunikationsverbindung zwischen der Verarbeitungseinheit und dem Antennensystem,
- Erzeugen einer elektrischen Verbindung zwischen der Verarbeitungseinheit und dem Antennensystem und einer Leistungsquelle (27) wie etwa einer Batterie, einem Nabendynamo oder einem Elektromotor,
- Bedecken des Antennensystems mit der nicht leitfähigen Abdeckung wie etwa der Plakette.

7. Elektrofahrrad (1), das Folgendes umfasst:
- einen Rahmen (2),
- ein Antennensystem (3), das zum Empfangen oder Senden von Funksignalen, um die Position des Fahrrades zu bestimmen, und/oder Empfangen oder Senden von Daten von oder zu dem Fahrrad, wie etwa Daten bezüglich der Verwendung des Fahrrades, ausgelegt ist, wobei das Antennensystem (3) in einer nicht leitfähigen Verkleidung (5) angeordnet ist, die in einer Batterie-Dockingstation (11) des Elektrofahrrades enthalten ist, wobei die Batterie-Dockingstation die nicht leitfähige Verkleidung am Ort des Antennensystems aufweist, **dadurch gekennzeichnet, dass**:
das Antennensystem in der nicht leitfähigen Verkleidung (5) an einer äußeren Oberfläche (6) des Rahmens angeordnet ist und die Batterie-Dockingstation (11) an einem hinteren Träger (12) des Elektrofahrrades angeordnet ist, und dass:
das Antennensystem an einer Vorderseite (13) der Batterie-Dockingstation, wenn es in Gebrauch ist, in einem separaten Batterie-Dockingstation-Modul (29) angeordnet ist, das an der Vorderseite der Batterie-Dockingstation (11) angeordnet ist, das das Antennensystem (3) und eine Verarbeitungseinheit (30), die mit dem Antennensystem (3) kommunikationstechnisch verbunden ist, aufnimmt.

8. Elektrofahrrad nach Anspruch 7, wobei das Antennensystem ein GPS-, GSM-, Wi-Fi- oder Bluetooth-Modul umfasst.

9. Elektrofahrrad nach Anspruch 7 oder 8, wobei das Antennensystem dazu ausgelegt ist, Daten über 4G-LTE, 2G-GSM/GPRS, 3G, Bluetooth, RFID, NFC, Wi-Fi, NB-loT, LoRa oder CAT-M zu senden.

10. Elektrofahrrad nach Anspruch 7, wobei die Batterie-Dockingstation (11) eine Sicherungsbatterie (23) enthält.

11. Elektrofahrrad nach Anspruch 10 mit einem Diebstahlsicherungssystem (24), das dazu ausgelegt ist, einen elektrischen Antrieb, der im Elektrofahrrad enthalten ist, zu sperren, wenn das Antennensystem, eine Datensammelvorrichtung (14), die Verarbeitungseinheit und/oder die Sicherungsbatterie aus dem Elektrofahrrad entfernt werden.

12. Elektrofahrrad nach einem der Ansprüche 7-11, wobei die Verarbeitungseinheit dazu ausgelegt ist, ein Regulierungssystem des Elektrofahrrades durch ein Signal vom Antennensystem zu deaktivieren.

## Revendications

1. Bicyclette (1), comprenant :
- un cadre (2),
- un système d'antenne (3) adapté pour recevoir ou transmettre des signaux radio afin de déterminer la position de la bicyclette et/ou recevoir ou transmettre des données de ou à la bicyclette, telles que des données relatives à l'utilisation de la bicyclette, **caractérisée en ce que** :
le système d'antenne (3) est agencé dans un tube de direction (35) du cadre, derrière une ouverture traversante de cadre (7) au niveau d'une tête de tube (8) du cadre sur un côté avant du tube de direction, dans laquelle l'ouverture traversante de cadre et le système d'antenne, lorsqu'ils sont utilisés, sont recouverts d'un couvercle non conducteur (9), tel qu'un badge.

2. Bicyclette selon la revendication 1, dans laquelle le système d'antenne comprend un module GPS, GSM, Wi-Fi ou Bluetooth.

3. Bicyclette selon l'une des revendications précédentes, dans laquelle le système d'antenne est adapté pour transmettre des données via 4G LTE, 2G GSM/GPRS, 3G, Bluetooth, RFID, NFC, Wi-Fi, NB-loT, LoRa ou CAT-M.

4. Bicyclette selon l'une des revendications précédentes, comprenant une unité de traitement (30) qui est reliée en communication (20) au système d'antenne et est agencée dans une tige de selle (21), un tube horizontal (31), ou un tube incliné (32) du cadre.

5. Bicyclette selon la revendication 4, dans laquelle l'unité de traitement comprend une batterie de secours (23).

6. Procédé de fabrication d'une bicyclette (1) selon la revendication 4, comprenant les étapes suivantes de :
- insertion de l'unité de traitement (30) dans la tige de selle (21) du cadre via une ouverture (25) sur un côté supérieur de la tige de selle ou via une ouverture (26) sur un côté inférieur de la tige de selle, ou dans le tube horizontal (31) ou dans le tube incliné (32),
- fixation de l'unité de traitement à l'intérieur de la tige de selle, de préférence dans la moitié inférieure de la tige de selle, ou dans le tube horizontal (31) ou dans le tube incliné (32),
- positionnement du système d'antenne dans le tube de direction (35) du cadre derrière l'ouverture traversante de cadre (7) au niveau de la tête de tube (8) du cadre sur le côté avant du tube de direction,
- création d'une liaison de communication entre l'unité de traitement et le système d'antenne,
- création d'un raccordement électrique entre l'unité de traitement et le système d'antenne et une source d'alimentation (27), telle qu'une batterie, un dynamo moyeu ou un moteur électrique,
- couverture du système d'antenne par le couvercle non conducteur, par exemple le badge.

7. Bicyclette électrique (1), comprenant :
- un cadre (2),
- un système d'antenne (3) adapté pour recevoir ou transmettre des signaux radio afin de déterminer la position de la bicyclette et/ou recevoir ou transmettre des données de ou à la bicyclette, telles que des données relatives à l'utilisation de la bicyclette, dans laquelle le système d'antenne (3) est agencé dans une gaine non conductrice (5) constituée par une station d'accueil de batterie (11) de la bicyclette électrique, dans laquelle la station d'accueil de batterie a la gaine non conductrice à l'emplacement du système d'antenne, **caractérisée en ce que** :
le système d'antenne est agencé dans la gaine non conductrice (5) sur une surface extérieure (6) du cadre et la station d'accueil (11) est agencée sur un porte-bagages arrière (12) de la bicyclette électrique, et **en ce que** :
le système d'antenne est agencé sur un côté avant (13) de la station d'accueil de batterie lorsqu'il est utilisé, dans un module de station d'accueil de batterie séparé (29) agencé sur le côté avant de la station d'accueil de batterie (11), logeant le système d'antenne (3) et une unité de traitement (30) reliée en communication au système d'antenne (3).

8. Bicyclette électrique selon la revendication 7, dans laquelle le système d'antenne comprend un module GPS, GSM, Wi-Fi ou Bluetooth.

9. Bicyclette électrique selon la revendication 7 ou 8, dans laquelle le système d'antenne est adapté pour transmettre des données via 4G LTE, 2G GSM/GPRS, 3G, Bluetooth, RFID, NFC, Wi-Fi, NB-loT, LoRa ou CAT-M.

10. Bicyclette électrique selon la revendication 7, dans laquelle la station d'accueil de batterie (11) comprend une batterie de secours (23).

11. Bicyclette électrique selon la revendication 10, comprenant un système antivol (24) adapté pour désactiver un dispositif d'entraînement électrique compris dans la bicyclette électrique lorsque le système d'antenne, un dispositif de collecte de données (14), l'unité de traitement et/ou la batterie de secours sont retirés de la bicyclette électrique.

12. Bicyclette électrique selon l'une quelconque des revendications 7 à 11, dans laquelle l'unité de traitement est adaptée pour désactiver un système de régulation de la bicyclette électrique au moyen d'un signal provenant du système d'antenne.
